(19) Europäisches Patentamt
European Patent Office
Office européen des brevets

(11) Veröffentlichungsnummer : **0 169 295**
**B1**

# (12) EUROPÄISCHE PATENTSCHRIFT

(45) Veröffentlichungstag der Patentschrift : 15.06.88

(21) Anmeldenummer : 85100577.7

(22) Anmeldetag : 22.01.85

**ERRATUM**

| DIE TEXTSTELLE :<br>TEXT PUBLISHED :<br>LE PASSAGE SUIVANT : | (SEITE, SPALTE, ZEILE)<br>(PAGE, COLUMN, LINE)<br>(PAGE, COLONNE, LIGNE) | | LAUTET BERICHTIGT:<br>SHOULD READ :<br>DEVRAIT ETRE LU : |
|---|---|---|---|
| $H_2 = CHCOO(CH_2)_3$— | 3 | 16 | $H_2C{=}CHCOO(CH_2)_3$— |
| 5,0 mN/nm | 6 | 12 | 5,0 mN/mm |
| Organo(poly)siloxanen in an sich bekannter daß Organo(poly)siloxan der Formel dadurch gekennzeichnet, | 6 | 61/62 | Organo(poly)siloxanen in an sich bekannter Weise, dadurch gekennzeichnet, daß Organo(poly)siloxan der Formel |
| $HO(SiR_2{}^5O)_nH$ bzw. $(SiR_2O)_q$ | 7 | 19 | $HO(SiR_2{}^5O)_nH$ bzw. $(SiR_2{}^5O)_q$ |

Tag der Entscheidung über die Berichtigung / Date of decision on rectification: / Date de décision portant sur modification: 23.08.88

Ausgabe- und Veröffentlichungstag: / Issue and publication date: / Date d'edition et de publication: 02.11.88

Patbl.Nr / EPB no: / Bull. no: 88/44

(19) Europäisches Patentamt
European Patent Office
Office européen des brevets

(11) Veröffentlichungsnummer : **0 169 295**
**B1**

(12) # EUROPÄISCHE PATENTSCHRIFT

(45) Veröffentlichungstag der Patentschrift : **15.06.88**

(51) Int. Cl.[4] : **C 08 G 77/28**, C 08 L 83/08, C 08 G 77/44, C 09 D 3/82

(21) Anmeldenummer : **85100577.7**

(22) Anmeldetag : **22.01.85**

(54) **Organopolysiloxane, Verfahren zu ihrer Herstellung und Verwendung dieser Organopolysiloxane.**

(30) Priorität : **24.01.84 DE 3402317**

(43) Veröffentlichungstag der Anmeldung : **29.01.86 Patentblatt 86/05**

(45) Bekanntmachung des Hinweises auf die Patenterteilung : **15.06.88 Patentblatt 88/24**

(84) Benannte Vertragsstaaten : **AT BE DE FR GB IT NL SE**

(56) Entgegenhaltungen :
**US-A- 4 359 369**
**PATENT ABSTRACTS OF JAPAN, unexamined applications, Sektion C, Band 4, Nr. 12, 29. Jänner 1980 THE PATENT OFFICE JAPANESE GOVERNMENT Seite 120 C 71**

(73) Patentinhaber : **WACKER-CHEMIE GMBH**
**Prinzregentenstrasse 22**
**D-8000 München 22 (DE)**

(72) Erfinder : **Hockemeyer, Friedrich, Dipl.-Ing.**
**Reuternstrasse 15**
**D-8399 Griesbach (DE)**
Erfinder : **John, Peter, Dr.-Dipl.-Chem.**
**Marienbergerstrasse 80**
**D-8263 Burghausen (DE)**
Erfinder : **Müller, Johann**
**Friedrich-Ebert-Strasse 3**
**D-8263 Burghausen (DE)**
Erfinder : **Preiner, Gerhard, Dr. Dipl.-Chem.**
**Mehringerstrasse 56**
**D-8263 Burghausen (DE)**

**EP 0 169 295 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus US-A-4 290 869 sind bereits photopolymerisierbare Organopolysiloxanzusammensetzungen mit SiC-gebundenen Acryloxyalkyl- oder Methacryloxyalkylgruppen sowie Mercaptoalkylgruppen bekannt. Gemäß dieser Druckschrift, Spalte 8, Zeile 36 bis 38, haben derartige Zusammensetzungen in verschlossenen und undurchsichtigen Behältern eine Beständigkeit von etwa 48 Stunden.

Aus US-A-4 359 369 sind photopolymerisierbare Organopolysiloxanzusammensetzungen mit SiC-gebundenen Thioacryloxyalkyl- und Mercaptoalkylgruppen bekannt.

Es bestand nun die Aufgabe, verhältnismäßig leicht zugängliche Organopolysiloxane bereitzustellen, welche i verschlossenen und undurchsichtigen Behältern bei Raumtemperatur mindestens 6 Monate gelagert werden können, keinen unangenehmen Geruch verbreiten, bei der Einwirkung von energiereicher Strahlung besonders rasch vernetzen, wobei die Vernetzung durch Luft-Sauerstoff nicht beeinträchtigt wird, keine merkliche Nachvernetzung stattfindet, das Ausmaß der Abweisung von klebrigen Stoffen, also der « Trennwert », der mit den erfindungsgemäßen oder erfindungsgemäß hergestellten Organopolysiloxanen erzeugten Beschichtungen auch bei langer Lagerung der Organopolysiloxane vor der Vernetzung oder bei langer Lagerung der Beschichtungen gleich oder praktisch gleich bleibt und derartige Beschichtungen sehr durchsichtig, biegsam und abriebfest sind.

Gegenstand der Erfindung sind Organopolysiloxane, worin mindestens 95 Molprozent der Siloxaneinheiten solche der Formel

$$HR^1C = CR^2COOR^3SiR_2O_{1/2}$$

worin R ein einwertiger Kohlenwasserstoffrest, der durch Halogen substituiert sein kann, $R^1$ Wasserstoff oder ein Phenylrest, der durch Halogen substituiert sein kann, $R^2$ Wasserstoff oder ein Alkylrest mit 1 bis 4 Kohlenstoffatomen je Rest und $R^3$ ein zweiwertiger Kohlenwasserstoffrest ist, der durch Halogen substituiert sein kann, wobei 2 solcher Siloxaneinheiten je Molekül vorliegen, der Formel

$$HSR^4SiRO$$

worin R die oben dafür angegebene Bedeutung hat und $R^4$ ein zweiwertiger Kohlenwasserstoffrest ist, sowie der Formel

$$R_2{}^5SiO$$

worin $R^5$ die gleiche Bedeutung wie R hat oder ein durch die Gruppe $HR^1C = CR^2COO$ ($R^1$ und $R^2$ haben jeweils die oben dafür angegebene Bedeutung) substituierter Kohlenwasserstoffrest ist, sind und wobei mindestens 95 % der an Silicium gebundenen Sauerstoffatome bei den Siloxaneinheiten mit der HS-Gruppe in der Gruppierung

$$\equiv SiOSi \equiv$$

vorliegen.

Die erfindungsgemäßen und erfindungsgemäß hergestellten Organopolysiloxane unterscheiden sich somit von den Organopolysiloxanen gemäß US-A-4 290 869 vor allem dadurch, daß sie keine oder praktisch keine SiOC-gebundenen organischen Reste enthalten. Ihre viel höhere Lagerbeständigkeit wird auf diese Tatsache zurückgeführt. Es ist überraschend, daß die erfindungsgemäßen und erfindungsgemäß hergestellten Organopolysiloxane trotz dieser Abwesenheit SiOC-gebundener organischer Reste rasch vernetzen, wenn sie energiereicher Strahlung ausgesetzt werden.

Beispiele für Kohlenwasserstoffreste R und $R^5$ sind Alkylreste mit 1 bis 18 Kohlenstoffatomen je Rest, wie der Methyl-, Ethyl-, n-Propyl-, Isopropyl-, n-Butyl- und sec-Butylrest sowie Octadecylreste ; Cycloalkylreste mit 5 bis 8 Kohlenstoffatomen je Rest, wie der Cyclohexyl- und Cycloheptylrest sowie methylcyclohexylreste ; Reste mit aliphatischen Kohlenstoff-Kohlenstoff-Doppelbindungen und 2 bis 18 Kohlenstoffatomen je Rest, wie der Vinyl- und Allylrest ; Arylreste mit 6 bis 12 Kohlenstoffatomen je Rest, wie der Phenylrest und Xenylreste ; Alkarylreste mit 7 bis 18 Kohlenstoffatomen je Rest, wie Tolylreste ; und Aralkylreste mit 7 bis 18 Kohlenstoffatomen je Rest, wie der Benzyl- und Beta-Phenylethylrest.

Beispiele für durch Halogen substituierte Kohlenwasserstoffreste R und $R^5$ sind der 3-Chlorpropyl- und 3,3,3-Trifluorpropylrest sowie o-, p- und m-Chlorphenylreste.

Vorzugsweise ist $R^1$ Wasserstoff. Beispiele für durch Halogen substituierte Phenylreste sind o-, m- und p-Chlorphenylreste.

Vorzugsweise ist auch $R^2$ Wasserstoff. $R^2$ kann aber auch z. B. eine Methylgruppe sein.

Vorzugsweise ist $R^3$ ein Rest der Formel $—(CH_2)_p—$, wobei p eine ganze Zahl im Wert von 1 bis 6, meist 2 bis 6, insbesondere 3 ist. $R^3$ kann aber auch z. B. ein verzweigter Alkylenrest, wie der Rest der Formel $—CH_2C(CH_3)_2CH_2—$, Arylrest, wie Phenylenreste, Alkarylenrest wie Reste der Formel $—(CH_2)_2C_6H_4—$, oder Aralkylenrest, wie Toluylenreste, sein. Beispiele für durch Halogen substituierte

Reste $R^3$ sind o-, p- und m-Chlorphenylenreste.

Die Beispiele für Kohlenwasserstoffreste $R^3$ gelten alle auch für die Reste $R^4$, wobei wieder der Rest der Formel $-(CH_2)_3-$ wegen der leichten Zugänglichkeit besonders bevorzugt ist.

Weitere Beispiele für Reste $R^4$ sind solche der Formel

$-(CH_2)_2-$

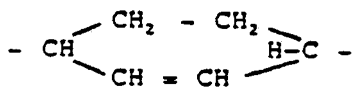, 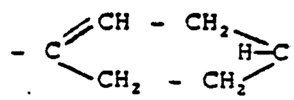 und 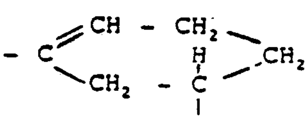

Das wichtigste Beispiel für einen durch die Gruppe $HR^1C = CR^2COO$-substituierten Kohlenwasserstoffrest $R^5$ ist der Rest der Formel

$$H_2 = CHCOO(CH_2)_3-$$

Vorzugsweise sind jedoch mindestens 95 % der Anzahl der Reste R und $R^5$ Methylreste.

Vorzugsweise liegen 1 bis 30, insbesondere 2 bis 10 Einheiten der Formel

$$HSR^4SiRO$$

und 10 bis 1 000, insbesondere 50 bis 300 Einheiten der Formel

$$R_2^5SiO$$

je Molekül vor.

Vorzugsweise beträgt das Verhältnis der Einheiten der Formel

$$HSR^4SiO$$

zu den Einheiten der Formel

$$R_2^5SiO$$

1 : 1 000 bis 1 : 1, insbesondere 1 : 100 bis 1 : 30.

Die bevorzugten Organopolysiloxane der erfindungsgemäßen Art können durch die allgemeine Formel

$$H_2C = CHCOO(CH_2)_p\ SiR_2O \left\{ SiR\ [(CH_2)_3\ SH]O \right\}_m\ (SiR_2^5O)_n\ SiR_2(CH_2)_p\ OOCHC = CH_2$$

wiedergegeben werden, worin R, $R^5$ und p jeweils die oben dafür angegebene Bedeutung haben, m eine ganze Zahl von 1 bis 30, insbesondere 2 bis 10 und n eine ganze Zahl von 10 bis 1 000, insbesondere 50 bis 300, ist von wobei das Verhältnis von m : n 1 : 1 000 bis 1 : 1, insbesondere 1 : 100 bis 1 : 30 ist.

Obwohl durch die oben verwendete Formel wie üblich nicht dargestellt, können zusätzlich zur den darin angegebenen Einheiben bis zu 5 Molprozent andere, meist jedoch nur als mehr oder weniger schwer vermeidbare Verunreinigungen vorhandene Siloxaneinheiten wie Einheiten der Formel $RSiO_{3/2}$, wobei R die oben dafür angegebene Bedeutung hat, oder $SiO_4/2$, vorliegen.

Gegenstand der Erfindung ist weiterhin ein Verfahren zur Herstellung von Organopolysiloxanen der erfindungsgemäßezn und bevorzugten Art durch Äquilibrierung von Organo(poly) siloxanen in an sich bekannter Weise, dadurch gekennzeichnet, daß Organo(poly) siloxan der Formel

$$CH_2 = CHCOO(CH_2)_p\ SiR_2O(SiR_2^5O)_x\ SiR_2(CH_2)_p\ OOCHC = CH_2$$

worin R, $R^5$ und p jeweils die oben dafür angegebene Bedeutung haben und $\times$ 0 oder eine ganze Zahl im Wert von 1 bis 1 000 ist, mit linearem Organo(poly) siloxan der Formel

$$HO \left\{ SiR\ [(CH_2)_3\ SH]\ O \right\}_m\ (SiR_2^5O)_x\ H$$

worin $R^5$, m und x jeweils die oben dafür angegebene Bedeutung haben, oder cyclischem Organopolysiloxan aus Einheiten der Formel

$$SiR\ [(CH_2)_3\ SH]\ O$$

gegebenenfalls neben Einheiten der Formel

$$SiR_2^5O$$

wobei R und $R^5$ jeweils die oben dafür angegebene Bedeutung haben und die Gesamtzahl der Siloxaneinheiten in solchem cyclischem Organopolysiloxan 3 bis 6 je Molekül beträgt, und gegebenenfalls linearem oder cyclischem Organo(poly) siloxan der Formel

$$HO(SiR_2^5O)_nH \text{ bzw. } (SiR_2^5O)_q$$

worin $R^5$ und n jeweils die oben dafür angegebene Bedeutung haben und q eine ganze Zahl im Wert von 3 bis 6 ist, äquilibriert wird.

Bei diesem Verfahren werden die Reaktionsteilnehmer in Mengen von 0,5 bis 15 HS-Gruppen, vorzugsweise 1 bis 5 HS-Gruppe(n) je Acryloxygruppe eingesetzt.

Die Anzahl der $SiR_2^5O$-Einheiten in den Reaktionsteilnehmern entspricht dem gewünschten Verhältnis von m : n im Endprodukt.

Vorzugsweise haben die erfindungsgemäßen und erfindungsgemäß hergestellten Organopolysiloxane eine Viskosität von 50 bis 10 000 mPa · s bei 25 °C.

Bei dem Äquilibrieren werden als Katalysatoren vorzugsweise saure Katalysatoren eingesetzt. Beispiele für solche Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1 000 Gewichts-ppm (= Teilen je Million), insbesondere 50 bis 200 Gewichts-ppm, jeweils bezogen auf das Gesamtgewicht der eingesetzten Organosilicium verbindungen, verwendet.

Zur Beschleunigung der Äquilibrierung kann auf 70° bis 150 °C erwärmt werden. Das Äquilibrieren wird vorzugsweise in 5 bis 20 Gewichtsprozent, bezogen auf das Gesamtgewicht der jeweils eingesetzten Organosiliciumverbindungen, an mit Wasser nichtmischbarem Lösungsmittel, wie Toluol, durchgeführt, um eine vorzeitige Vernetzung des Reaktionsprodukts zu verhindern und das Austragen von bei der Reaktion gebildetem Wasser zu erleichtern.

Das erfindungsgemäße Verfahren wird der Einfachheit halber vorzugsweise beim Druck der umgebenden Atmosphäre, also bei 1 020 mbar (abs.) oder etwa 1 020 mbar (abs.) durchgeführt. Falls erwünscht, können aber auch höhere oder niedrigere Drücke angewendet werden.

Vor dem Aufarbeiten des bei dem Äquilibrieren erhaltenen Gemisches kann der Katalysator unwirksam gemacht werden, z. B. durch Zugabe von Trioctylamin oder Triisononylamin.

Gegenstand der Erfindung ist schließlich auch die Verwendung der erfindungsgemäßen oder erfindungsgemäß hergestellten Organopolysiloxane zur Herstellung von durch energiereiche Strahlung vernetzbaren Überzügen.

Die Überzüge, die aus den erfindungsgemäß oder erfindungsgemäß hergestellten Organopolysiloxanen hergestellt werden, sind abweisend gegenüber klebrigen Stoffen und Wasser. Sie eignen sich auch als Schutzüberzüge.

Die Oberflächen, auf welche die erfindungsgemäßen oder erfindungsgemäß hergestellten Organopolysiloxane zwecks Herstellung von Überzügen aufgebracht werden können, können sein z. B. diejenigen von keramischen Gegenständen oder glas, einschließlich Glasfasern, wozu wiederum Lichtleitfasern gehören, Papieren, wie Kraftpapier oder Pergaminpapier, Pappen einschließlich solcher aus Asbest, Zellglass, Holz, Kork, Kunststoffolien, z. B. Polyethylenfolien oder Polypropylenfolien, gewebtem oder ungewebtem Tuch aus natürlichen Fasern oder synthetischen organischen Fasern oder Glasfasern, Metallen, wie Aluminiumfolien, mit Polyethylen beschichtetem Kraftpapier oder mit Polyethylen beschichteter Pappe. Soweit vorstehend Polyethylen genannt wurde, kann es sich dabei jeweils um Hoch-, Mittel- oder Niederdruck-Polyethylen handeln.

Das erfindungsgemäße Verfahren eignet sich ausgezeichnet z. B. zur Herstellung von Trägern für Etiketten, wie Preisauszeichnungsetiketten.

Das Auftragen der erfindungsgemäßen oder erfindungsgemäß hergestellten Organopolysiloxane auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakelbeschichtung, einschließlich derjenigen mit einem Meyer-Stab (englisch : Meyer-rod) oder mittels einer Luftbürste. Erfolgt das Auftragen mittels einer Offsetgravur- Überzugsvorrichtung, so kann das Substrat mit der zu überziehenden Oberfläche mit höherer Geschwindigkeit laufen als der Formzylinder.

Bei dem Auftragen der erfindungsgemäßen oder erfindugsgemäß hergestellten Organopolysiloxane auf die zu überziehenden Oberflächen können die Organopolysiloxane gegebenenfalls in Lösungsmittel oder in Form einer Emulsion vorliegen. Vorzugsweise sind jedoch keine Lösungsmittel oder andere Verdünnungsmittel vorhanden.

Die erfindungsgemäßen oder erfindungsgemäß hergestellten Organopolysiloxane vernetzen auch in Schichtdicken von 5 mm und mehr in verhältnismäßig kurzer Zeit, wenn sie energiereicher Strahlung ausgesetzt werden. Sie eignen sich deshalb und wegen ihrer durchsichtigkeit ausgezeichnet als

Vergußmassen für elektrische oder elektronische Bauteile.

Bei der zur Vernetzung der erfindungsgemäß oder erfindungsgemäß hergestellten Organopolysiloxane angewendeten energiereichen Strahlung handelt es sich vorzugsweise Ultraviolett-Licht. Es kann sich bei der energiereichen Strahlung aber auch z. B. um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich derjenigen mittels Infrarotlicht, angewendet werden. Eine solche Wärmezufuhr ist jedoch überhaupt nicht erforderlich. Vorzugsweise unterbleibt sie, um den Aufwand für Energie zu verringern.

Bei Elektronienstrahlen als energiereicher Strahlung sind 1 bis 4 M Rad ausreichend.

Als Ultraviolettlicht ist solches mit Wellenlängen im Bereich von 200 bis 400 nm (Nanometer) bevorzugt.

Wenn es sich bei der zur Vernetzung der erfindungsgemäßen oder erfindungsgemäß hergestellten Organopolysiloxane angewendeten energiereichen Stralung um Ultraviolettlicht handelt, so müssen diese Organopolysiloxane im Gemisch mit mindestens einem Photosensibilisator vorliegen. Bevorzugt sind Photosensibilisatoren, die in Organopolysiloxanen löslich sind, wie 2-Hydroxy-2-methyl-1-phenyl-propan-1-on und 2,4-Bis-(trimethylsiloxy)-benzophenon. Weitere Beispiele für geeignete Photosensibilisatoren sind Benzophenon und substituierte Benzophenone, Benzoin und substituierte Benzoine sowie Benzil und substituierte Benzile. Im einzelnen seien aufgeführt: Acetophenon, 2-Ethoxy-2-methylacetophenon, Trichlorbutylacetophenon, 2-Ethoxy-2-phenylacetophenon, Mesityloxid, Propiophenon, Benzophenon, Xanthon, Thioxanthon, Fluorenon, Benzaldehyd, Fluoren, Anthrachinon, Carbazol, 3-Methylacetophenon, 4-Methylacetophenon, 3-Bromacetophenon, 4-Methylbenzophenon, 4-Chlorbenzophenon, 4,4-Dimethoxybenzophenon, 4-Chlor-4'-benzylbenzophenon, 3-Chlorxanthon, 3,9-Dichlorxanthon, 3-Chlor-8-nonylxanthon, Chloranthrachinon, Michlers Keton, Zimtsäure, Benzoinmethylether, Anthrachinon-1,5-disulfonsäuredinatriumsalz, 2-Naphthalinsulfonylchlorid, Benzil, Benzilketale und Hydroxybenzophenone.

Vorteilhafterweise sind Photosensibilisator-Mengen von 0,5 bis 2 Gewichtsprozent, bezogen auf das Gewicht der erfindungsgemässen oder erfindungsgemäß hergestellten Organopolysiloxane, ausreichend.

Zusätzlich zu Organopolysiloxan und erforderlichenfalls Photosensibilisator, können bei der endgültigen Anwendung gegebenenfalls weitere Stoffe mitverwendet. Beispiele für derartige weitere Stoffe sind insbesondere Mittel zur Verbesserung der Haftung der vernetzten Organopolysiloxane auf den Unterlagen, auf denen sie vernetzt wurden, wie Butandioldiacrylsäureester und gamma-Glycidoxypropyltriacetoxysilan.

In den folgenden Beispielen beziehen sich alle Angaben von Prozentsätzen auf das Gewicht, soweit nichts anderes angegeben ist.

## Beispiel 1

Eine Mischung aus 410,4 g eines Mischhydrolysates aus 29 Mol des Silans der Formel

$$(CH_3)_2\ SiCl_2$$

und 1 Mol des Silans der Formel

$$CH_3\ [HS\ (CH_2)_3]\ Si(OCH_3)_2$$

das in den endständigen Einheiten je eine Si-gebundene Hydroxylgruppe enthält, 60 g des Organopolysiloxans der Formel

$$H_2C = CHCOO(CH_2)_3\ Si(CH_3)_2—O—[Si(CH_3)_2\ O]_9\ Si(CH_3)_2\ (CH_2)_3\ OOCHC = CH_2$$

444 g in den endständigen Einheiten je eine Si-gebundene Hydroxylgruppe aufweisendem Dimethylpolysiloxan mit durchschnittlich 100 Si-Atomen je Molekül und 150 g Toluol wird nach Vermischen mit 0,36 ml einer 25 %-igen Lösung von Phosphornitridchloriden in Methylenchlorid zum Sieden unter Rückfluß 2 Stunden erwärmt, wobei das bei der Reaktion gebildete Wasser in einer Dean-Stark-Falle aufgefangen wird. Dann wird der Katalysator mit 0,5 g Triisononylamin unwirksam gemacht und die Lösung mit Hilfe von Aktivkohle und Diatomeenerde filtriert. Das Lösungsmittel und niedermolekulare Produkte werden bei 80 °C und 100 Pa (abs.) abdestilliert. Das in einer Ausbeute von 825 g (90 % d. Th.) erhaltene klare, farblose Öl hat eine Viskosität von 800 mPa · s bei 25 °C. Es enthält aufgrund des Kernresonanzspektrums durchschnittlich 230 Dimethylsiloxaneinheiten je Molekül und 3,8 $CH_3$ [HS $(CH_2)_3$] SiO-Einheiten je Molekül. Es ist im verschlossenen und undurchsichtigen Behalter bei Raumtemperatur mindestens 6 Monate lagerfähig.

## Beispiel 2

Eine Probe des gemäß Beispiel 1 hergestellten Organopolysiloxans wird mit 1 % 2-Hydroxy-2-methyl-1-phenyl-propan-1-on und 0,8 % Butandioldiacrylat vermischt und mit einem Glasstab auf auf einem Kalander unter Wasserdampf geglättetes Kraftpapier aufgetragen. Bei Belichtung mit einer Quecksilber-Mitteldruck-Ultraviolettlampe mit einer Leistung von 80 Watt/cm Leuchtlänge und einem Maximum der Leistung bei 366 nm in einem Abstand 10 cm von der zu vernetzenden Organopolysiloxanoberfläche vernetzt das auf das Papier Aufgebrachte Gemisch innerhalb 0,3 Sekunden zu einer glänzenden, abriebfesten Beschichtung.

Prüfwerte nach FINAT 10 und 11, abgedruckt in « Suppliers and Users Technical Manual », Juni 1980, Seite 21 bis 24, unter Verwendung von handelsüblichem selbstklebendem (englisch. pressure sensitive) 2 cm breitem Klebeband (« Tesafilm rot Nr. 154 », Beiersdorf AG, Hamburg, BRD-der Wortteil « Tesa » ist ein Registriertes Warenzeichen) :

| | |
|---|---|
| Trennwert: | 5,0 mN/nm |
| Restklebkraft: | 74 % |

Beispiel 3

Eine weitere Probe des gemäß Beispiel 1 hergestellten Organopolysiloxans wird mit 1,5 % gamma-Glycidoxypropyltriacetoxysilan vermischt und mit einem Glasstab auf gestrichenes Kraftpapier aufgetragen. Bei Bestrahlung in einer Elektronenstrahlungsanlage bei 3 M Rad vernetzt das auf das Papier aufgebrachte Gemisch innerhalb 0,1 Sekunden zu einer glänzenden, abriebfesten Beschichtung.

Prüfwerte, bestimmt wie in Beispiel 2 angegeben :

| | |
|---|---|
| Trennwert: | 4,9 mN/mm |
| Restklebkraft: | 100 % |

**Patentansprüche** (für die Vertragsstaaten : BE, DE, FR, GB, IT, NL, SE)

1. Organopolysiloxane, worin mindestens 95 Molprozent der Siloxaneinheiten der Formel

$$HR^1C = CR^2COOR^3SiR_2O_{1/2}$$

worin R ein einwertiger Kohlenwasserstoffrest, der durch Halogen substituiert sein kann, $R^1$ Wasserstoff oder ein Phenylrest, der durch Halogen substituiert sein kann, $R^2$ Wasserstoff oder ein Alkylrest mit 1 bis 4 Kohlenstoffatomen je Rest und $R^3$ ein zweiwertiger Kohlenwasserstoffrest ist, der durch Halogen substituiert sein kann, wobei 2 solcher Siloxaneinheiten je Molekül vorliegen, der Formel

$$HSR^4SiRO$$

worin R die oben dafür angegebene Bedeutung hat und $R^4$ ein zweiwertiger Kohlenwasserstoffrest ist, sowie der Formel

$$R_2{}^5SiO$$

worin $R^5$ die gleiche Bedeutung wie R hat oder ein durch die Gruppe $HR^1C = CR^2COO$ ($R^1$ und $R^2$ haben jeweils die oben dafür angegebene Bedeutung) substituierter Kohlenwasserstoffrest ist, sind und wobei mindestens 95 % der an Silicium gebundenen Sauerstoffatome bei den Silolxaneinheiten mit der HS-Gruppe in der Gruppierung

$$\equiv SiOSi \equiv$$

vorliegen.

2. Organopolysiloxane nach Anspruch 1, welche solche der Formel

$$H_2C = CHCOO(CH_2)_pSiR_2O \{SiR[(CH_2)_3SH]O\}_m (SiR_2{}^5O)_2SiR_2(CH_2)_pOOCHC = CH_2$$

sind, worin R und $R^5$ jeweils die in Anspruch 1 dafür angegebene Bedeutung haben, m eine ganze Zahl im Wert von 1 bis 30, n eine ganze Zahl von 10 bis 1 000 und p eine ganze Zahl im Wert von 1 bis 6 ist.

3. Verfahren zur Herstellung von Organopolysiloxanen nach Anspruch 2 durch Äquilibrierung von Organo(poly)siloxanen in an sich bekannter daß Organo(poly)siloxan der Formel dadurch gekennzeichnet,

$$CH_2 = CHCOO(CH_2)_pSiR_2O(SiR_2{}^5O)_xSiR_2(CH_2)_pOOCHC = CH_2$$

worin R, $R^5$ und p jeweils die in Anspruch 1 bzw. 2 dafür angegebene Bedeutung haben und x O oder eine ganze Zahl in Wert von 1 bis 1 000 ist, mit linearem Organo(poly) siloxan der Formel

$$HO \{SiR[(CH_2)_3SH]O\}_m (SiR_2{}^5O)_xH$$

worin $R^5$, m und x jeweils die in Anspruch 1 bzw. 2 bzw. vorstehend dafür angegebene Bedeutung haben, oder cyclischem Organopolysiloxan aus Einheiten der Formel

$$SiR[(CH_2)_3SH]O$$

gegebenenfalls neben Einheiten der Formel

$$SiR_2{}^5O$$

wobei R und $R^5$ jeweils die in Anspruch 1 dafür angegebene Bedeutung haben und die Gesamtzahl der Siloxan-Einheiten in solchem cyclischem Organopolysiloxan 3 bis 6 je Molekül beträgt, und gegebenenfalls linearem oder cyclischem Organo(poly)siloxan der Formel

$$HO(SiR_2{}^5O)_nH \text{ bzw. } (SiR_2O)_q$$

worin $R^5$ und n jeweils die in Anspruch 1 bzw. 2 dafür angegebene Bedeutung haben und q eine ganze Zahl im Wert von 3 bis 6 ist, äquilibriert wird.

4. Verwendung der Organopolysiloxane nach Anspruch 1 oder 2 oder der gemäß Anspruch 3 hergestellten Organopolysiloxane zur Herstellung von durch energiereiche Strahlung vernetzbaren Überzügen.

**Patentansprüche** (für den Vertragsstaat AT)

1. Verwendung von Organopolysiloxanen, worin mindestens 95 Molprozent der Siloxaneinheiten der Formel

$$HR^1C = CR^2COOR^3SiR_2O_{1/2}$$

worin R ein einwertiger Kohlenwasserstoffrest, der durch Halogen substituiert sein kann, $R^1$ Wasserstoff oder ein Phenylrest, der durch Halogen substituiert sein kann, $R^2$ Wasserstoff oder ein Alkylrest mit 1 bis 4 Kohlenstoffatomen je Rest und $R^3$ ein zweiwertiger Kohlenwasserstoffrest ist, der durch Halogen substituiert sein kann, wobei 2 solcher Siloxaneinheiten je Molekül vorliegen, der Formel

$$HSR^4SiRO$$

worin R die oben dafür angegebene Bedeutung hat und $R^4$ ein zweiwertiger Kohlenwasserstoffrest ist, sowie der Formel

$$R_2{}^5SiO$$

worin $R^5$ die gleiche Bedeutung wie R hat oder ein durch die Gruppe $HR^1C = CR^2COO$ ($R^1$ und $R^2$ haben jeweils die oben dafür angegebene Bedeutung) substituierter Kohlenwasserstoffrest ist, sind und wobei mindestens 95 % der an Silicium gebundenen Sauerstoffatome bei den Siloxaneinheiten mit der HS-Gruppe in der Gruppierung

$$\equiv SiOSi \equiv$$

vorliegen, zur Herstellung von durch energiereiche Strahlung vernetzbaren Überzügen.

2. Verfahren zur Herstellung von Organopolysiloxanen der Formel

$$H_2C = CHCOO(CH_2)_pSiR_2O \{SiR[(CH_2)_3SH]O\}_m (SiR_2{}^5O)_2SiR_2(CH_2)_pOOCHC = CH_2$$

worin R und $R^5$ jeweils die in Anspruch 1 dafür angegebene Bedeutung haben, m eine ganze Zahl im Wert von 1 bis 30, n eine ganze Zahl von 10 bis 1 000 und p eine ganze Zahl im Wert von 1 bis 6 ist, durch Äquilibrierung von Organo(poly)-siloxanen in an sich bekannter Weise, dadurch gekennzeichnet, daß Organo(poly) siloxan der Formel,

$$CH_2 = CHCOO(CH_2)_pSiR_2O(SiR_2{}^5O)_xSiR_2(CH_2)_pOOCHC = CH_2$$

worin R, $R^5$ und p jeweils die in Anspruch 1 bzw. 2 dafür angegebene Bedeutung haben und x O oder eine ganze Zahl im Wert von 1 bis 1 000 ist, mit linearem Organo(poly)siloxan der Formel

$$HO \{SiR[(CH_2)_3SH]O\}_m (SiR_2^5O)_xH$$

worin $R^5$, m und x jeweils die in Anspruch 1 bzw. 2 bzw. vorstehend dafür angegebene Bedeutung haben, oder cyclischem Organopolysiloxan aus Einheiten der Formel

$$SiR[(CH_2)_3SH]O$$

gegebenenfalls neben Einheiten der Formel

$$SiR_2^5O$$

wobei R und $R^5$ jeweils die in Anspruch 1 dafür angegebene Bedeutung haben und die Gesamtzahl der Siloxan-Einheiten in solchem cyclischem Organopolysiloxan 3 bis 6 je Molekül beträgt, und gegebenenfalls linearem oder cyclischem Organo(poly)siloxan der Formel

$$HO(SiR_2^5O)_nH \text{ bzw. } (SiR_2^5O)_q$$

worin $R^5$ und n jeweils die in Anspruch 1 bzw. 2 dafür angegebene Bedeutung haben und q eine ganze Zahl im Wert von 3 bis 6 ist, äquilibriert wird.

**Claims** (for the Contracting States : BE, DE, ER, GB, IT, NL, SE)

1. Organopolysiloxanes in which a minimum of 95 mole per cent of siloxane units are those of the formula

$$HR^1C = CR^2COOR^3SiR_2O_{1/2}$$

in which R is a monovalent hydrocarbon radical which can be substituted by halogen, $R^1$ is hydrogen or a phenyl radical which can be substituted by halogen, $R^2$ is hydrogen or an alkyl radical having 1 to 4 carbon atoms per radical and $R^3$ is a divalent hydrocarbon radical which can be substituted by halogen, 2 of such siloxane units being present per molecule and having the formula

$$HSR^4SiRO$$

in which R has the abovementioned meaning and $R^4$ is a divalent hydrocarbon radical and also having the formula

$$R_2^5SiO$$

in which $R^5$ has the same meaning as R or is a hydrocarbon radical which is substituted by the group $HR^1C = CR^2COO$ ($R^1$ and $R^2$ each have the abovementioned meaning), and a minimum of 95 % of the oxygen atoms bound to silicon being present in the siloxane units having the HS group in the grouping

$$\equiv SiOSi \equiv$$

2. Organopolysiloxanes according to Claim 1 which are those of the formula

$$H_2C = CHCOO(CH_2)_pSiR_2O \{SiR[(CH_2)_3SH]O\}_m (SiR_2^5O)_2SiR_2(CH_2)_pOOCHC = CH_2$$

in which R and $R^5$ each have the meaning given for them in Claim 1, m is an integer having a value from 1 to 30, n is an integer from 10 to 1,000 and p is an integer having a value from 1 to 6.

3. Process for preparing organopolysiloxanes according to Claim 2 by equilibration of organo(poly)siloxanes in a manner known per se, wherein an organo(poly)siloxane of the formula

$$CH_2 = CHCOO(CH_2)_pSiR_2O(SiR_2^5O)_xSiR_2(CH_2)_pCOCHC = CH_2$$

in which R, $R^5$ and p each have the meaning given for them in Claim 1 and/or 2 and x is O or an integer having a value from 1 to 1,000 (sic) is equilibrated with a linear organo(poly)siloxane of the formula

$$HO \{SiR[(CH_2)_3SH]O\}_m (SiR_2^5O)_xH$$

in which $R^5$, m and x each have the meaning given for them in Claim 1 and/or 2 and/or given above, or

with a cyclic organopolysiloxane consisting of units of the formula

$$SiR[(CH_2)_3SH]O$$

if desired, in addition to units of the formula

$$SiR_2^5O$$

in which R and $R^5$ each have the meaning given for them in Claim 1 and the total number of siloxane units in such a cyclic organopolysiloxane is 3 to 6 per molecule and, if desired, with a linear or cyclic organo(poly)siloxane of the formula

$$HO(SiR_2^5O)_nH \text{ or } (SiR_2^5O)_q$$

in which $R^5$ and n each have the meaning given for them in Claim 1 and/or 2 and q is an integer having a value from 3 to 6.

4. Use of the organopolysiloxanes according to Claim 1 or 2 or of the organopolysiloxanes prepared according to Claim 3 for preparing coatings which can be crosslinked by high-energy radiation.

**Claims** (for the Contracting State AT)

1. Use of organopolysiloxanes in which a minimum of 95 mole per cent of siloxane units are those of the formula

$$HR^1C = CR^2COOR^3SiR_2O_{1/2}$$

in which R is a monovalent hydrocarbon radical which can be substituted by halogen, $R^1$ is hydrogen or a phenyl radical which can be substituted by halogen, $R^2$ is hydrogen or an alkyl radical having 1 to 4 carbon atoms per radical and $R^3$ is a divalent hydrocarbon radical which can be substituted by halogen, 2 of such siloxane units being present per molecule and having the formula

$$HSR^4SiRO$$

in which R has the abovementioned meaning and $R^4$ is a divalent hydrocarbon radical and also having the formula

$$R_2^5SiO$$

in which $R^5$ has the same meaning as R or is a hydrocarbon radical which is substituted by the group $HR^1C = CR^2COO$ ($R^1$ and $R^2$ each have the abovementioned meaning), and a minimum of 95 % of the oxygen atoms bound to silicon being present in the siloxane units having the HS group in the grouping

$$\equiv SiOSi \equiv$$

for preparing coatings which can be crosslinked by high-energy radiation.

2. Process for preparing organopolysiloxanes of the formula

$$H_2C = CHCOO(CH_2)_pSiR_2O \left\{SiR[(CH_2)_3SH]O\right\}_m (SiR_2^5O)_2SiR_2(CH_2)_pOOCHC = CH_2$$

in which R and $R^5$ each have the meaning given for them in Claim 1, m is an integer having a value from 1 to 30, n is an integer from 10 to 1,000 and p is an integer having a value from 1 to 6 by equilibration of organo(poly)siloxanes in a manner known per se wherein an organo(poly)siloxane of the formula

$$CH_2 = CHCOO(CH_2)_pSiR_2O(SiR_2^5O)_xSiR_2(CH_2)_pOOCHC = CH_2$$

in which R, $R^5$ and p each have the meaning given for them in Claim 1 and/or 2 and x is 0 or an integer having a value from 1 to 1,000, is equilibrated with a linear organo(poly)siloxane of the formula

$$HO \left\{SiR[(CH_2)_3SH]O\right\}_m (SiR_2^5O)_xH$$

in which $R^5$, m and x each have the meaning given for them in Claim 1 and/or 2 and/or above, or with a cyclic organopolysiloxane consisting of units of the formula

$$SiR[(CH_2)_3SH]O$$

if desired, in addition to units of the formula

$$SiR_2^5O$$

in which R and $R^5$ each have the meaning given for them in Claim 1 and the total number of siloxane units in such a cyclic organopolysiloxane is 3 to 6 per molecule and, if desired, with a linear or cyclic organo(poly)siloxane of the formula

$$HO(SiR_2^5O)_nH \text{ or } (SiR_2^5O)_q$$

in which $R^5$ and n each have the meaning given for them in Claim 1 and/or 2 and q is an integer having a value from 3 to 6.

**Revendications** (Pour les Etats contractants : BE, DE, FR, GB, IT, NL, SE)

1. Polyorganosiloxanes dans lesquels au moins 95 % en moles des motifs siloxaniques sont des motifs répondant à la formule

$$HR^1C = CR^2COOR^3SiR_2O_{1/2}$$

dans laquelle R représente un radical hydrocarboné univalent, éventuellement porteur d'un halogène, $R^1$ représente l'hydrogène ou un radical phényle, éventuellement porteur d'un halogène, $R^2$ représente l'hydrogène ou un alkyle contenant de 1 à 4 atomes de carbone et $R^3$ représente un radical hydrocarboné bivalent, éventuellement halogéné, le nombre de motifs siloxaniques de ce type, par molécule, étant égal à 2, des motifs répondant à la formule suivante

$$HSR^4SiRO$$

dans laquelle R a la signification qui lui a été donnée ci-dessus et $R^4$ représente un radical hydrocarboné bivalent, ainsi que des motifs répondant à la formule suivante

$$R_2^5SiO$$

dans laquelle $R^5$ a la même signification que R ou représente un radical hydrocarboné porteur d'un radical $HR^1C = CR^2COO$ (dans lequel $R^1$ et $R^2$ ont chacun les significations indiquées ci-dessus), au moins 95 % des atomes d'oxygène liés au silicium pour les motifs siloxaniques à radical HS- se trouvant dans le groupement

$$\equiv SiOSi \equiv$$

2. Polyorganosiloxanes selon la revendication 1 qui répondent à la formule suivante

$$H_2C = CHCOO(CH_2)_pSiR_2O \left\{SiR[(CH_2)_3SH]O\right\}_m (SiR_2^5O)_2SiR_2(CH_2)_pOOCHC = CH_2$$

dans laquelle R et $R^5$ ont chacun les significations qui leur ont été données à la revendication 1, m désigne un nombre entier de 1 à 30, n un nombre entier de 10 à 1 000 et p un nombre entier de 1 à 6.

3. Procédé pour préparer des polyorganosiloxanes selon la revendication 2 par équilibrage de polyorganosiloxanes, de manière connue, procédé caractérisé en ce qu'on équilibre un polyorganosiloxane répondant à la formule

$$CH_2 = CHCOO(CH_2)_pSiR_2O(SiR_2^5O)_xSiR_2(CH_2)_pOOCHC = CH_2$$

dans laquelle R, $R^5$ et p ont chacun les significations qui leur ont été données à la revendication 1 ou à la revendication 2 et x représente un nombre entier de 0 à 1 000, avec un polyorganosiloxane linéaire répondant à la formule

$$HO \left\{SiR[(CH_2)_3SH]O\right\}_m (SiR_2^5O)_xH$$

dans laquelle $R^5$, m et x ont chacun les significations qui leur ont été données à la revendication 1 ou à la revendication 2, ou avec un polyorganosiloxane cyclique constitué de motifs de formule

$$SiR[(CH_2)_3SH]O$$

et éventuellement, en plus, de motifs de formule

$$SiR_2^5O$$

formules dans lesquelles R et $R^5$ ont chacun les significations qui leur ont été données à la revendication 1, le nombre total des motifs siloxaniques dans un tel polyorganosiloxane cyclique étant de 3 à 6 par molécule, et éventuellement avec un polyorganosiloxane linéaire ou un polyorganosiloxane cyclique répondant respectivement à l'une ou à l'autre des formules

$$HO(SiR_2^5O)_nH \text{ ou } (SiR_2^5O)_q$$

dans lesquelles $R^5$ et n ont chacun les significations qui leur ont été données à la revendication 1 ou à la revendication 2, et q représente un nombre entier de 3 à 6.

4. Application des polyorganosiloxanes selon l'une des revendications 1 et 2, ou des polyorganosiloxanes préparés selon la revendication 3 pour la réalisation de revêtements pouvant être réticulés par un rayonnement de haute énergie.

**Revendications** (pour l'Etat contractant AT)

1. Application de polyorganosiloxanes dans lesquels au moins 95 % en moles des motifs siloxaniques sont des motifs répondant à la formule

$$HR^1C = CR^2COOR^3SiR_2O_{1/2}$$

dans laquelle R représente un radical hydrocarboné univalent, éventuellement porteur d'un halogène, $R^1$ représente l'hydrogène ou un radical phényle, éventuellement porteur d'un halogène, $R^2$ représente l'hydrogène ou un alkyle contenant de 1 à 4 atomes de carbone et $R^3$ représente un radical hydrocarboné bivalent, éventuellement halogéné, le nombre de motifs siloxaniques de ce type, par molécule, étant égal à 2, des motifs répondant à la formule suivante

$$HSR^4SiRO$$

dans laquelle R a la signification qui lui a été donnée ci-dessus et $R^4$ représente un radical hydrocarboné bivalent, ainsi que des motifs répondant à la formule suivante

$$R_2^5SiO$$

dans laquelle $R^5$ a la même signification que R ou représente un radical hydrocarboné porteur d'un radical $HR^1C = CR^2COO$ (dans lequel $R^1$ et $R^2$ ont chacun les significations indiquées ci-dessus, au moins 95 % des atomes d'oxygène liés au silicium pour les motifs siloxaniques à radical HS- se trouvant dans le groupement

$$\equiv SiOSi \equiv$$

pour la réalisation de revêtements pouvant être réticulés par un rayonnement de haute énergie.

2. Procédé pour préparer des polyorganosiloxanes répondant à la formule

$$H_2C = CHCOO(CH_2)_pSiR_2O \left\{SiR[(CH_2)_3SH]O\right\}_m (SiR_2^5O)_2SiR_2(CH_2)_pOOCHC = CH_2$$

dans laquelle R et $R^5$ ont chacun les significations qui leur ont été données à la revendication 1, m désigne un nombre entier de 1 à 30, n un nombre entier de 10 à 1 000 et p un nombre entier de 1 à 6, par équilibrage de polyorganosiloxanes, de manière connue, procédé caractérisé en ce qu'on équilibre un polyorganosiloxane répondant à la formule

$$CH_2 = CHCOO(CH_2)_pSiR_2O(SiR_2^5O)_xSiR_2(CH_2)_pOOCHC = CH_2$$

dans laquelle R, $R^5$ et p ont chacun les significations qui leur ont été données à la revendication 1 ou à la revendication 2 et x représente un nombre entier de 0 à 1 000, avec un polyorganosiloxane linéaire répondant à la formule

$$HO \left\{SiR[(CH_2)_3SH]O\right\}_m (SiR_2^5O)_xH$$

dans laquelle $R^5$, m et x ont chacun les significations qui leur ont été données à la revendication 1 ou à la revendication 2, ou avec un polyorganosiloxane cyclique constitué de motifs de formule

$$SiR[(CH_2)_3SH]O$$

et éventuellement, en plus, de motifs de formule

$$SiR_2^5O$$

formules dans lesquelles R et $R^5$ ont chacun les significations qui leur ont été données à la revendication 1, le nombre total des motifs siloxaniques dans un tel polyorganosiloxane cyclique étant de 3 à 6 par molécule, et éventuellement avec un polyorganosiloxane linéaire ou un polyorganosiloxane cyclique répondant respectivement à l'une ou à l'autre des formules

$$HO(SiR_2^5O)_nH \text{ ou } (SiR_2^5O)_q$$

dans lesquelles $R^5$ et n ont chacun les significations qui leur ont été données à la revendication 1 ou à la revendication 2, et q représente un nombre entier de 3 à 6.